(19) Europäisches Patentamt / European Patent Office / Office européen des brevets

(11) **EP 4 102 249 B1**

(12) **EUROPÄISCHE PATENTSCHRIFT**

(45) Veröffentlichungstag und Bekanntmachung des Hinweises auf die Patenterteilung:
**11.02.2026   Patentblatt 2026/07**

(21) Anmeldenummer: **21179074.6**

(22) Anmeldetag: **11.06.2021**

(51) Internationale Patentklassifikation (IPC):
**G01S 7/4865** *(2020.01)*     **G01S 17/10** *(2020.01)*

(52) Gemeinsame Patentklassifikation (CPC):
**G01S 7/497; G01S 7/487; G01S 17/10**

(54) **VERFAHREN UND OPTISCHER SENSOR ZUM MESSEN EINES ABSTANDS EINES OBJEKTS**

METHOD AND OPTICAL SENSOR FOR MEASURING A DISTANCE OF AN OBJECT

MÉTHODE ET CAPTEUR OPTIQUE POUR MESURER UNE DISTANCE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.12.2022   Patentblatt 2022/50**

(73) Patentinhaber: **Pepperl+Fuchs SE**
**68307 Mannheim (DE)**

(72) Erfinder: **KLAR, Ulrich**
**12277 Berlin (DE)**

(74) Vertreter: **Schiffer, Axel Martin**
**Rundfunkplatz 2**
**80335 München (DE)**

(56) Entgegenhaltungen:
**JP-A- 2021 076 589     US-A1- 2019 250 257**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft in einem ersten Gesichtspunkt ein Verfahren zum Messen eines Abstands eines Objekts nach dem Oberbegriff des Anspruchs 1. In einem zweiten Gesichtspunkt betrifft die Erfindung einen optischen Sensor zum Messen eines Abstands eines Objekts nach dem Oberbegriff des Anspruchs 13.

Bei einem gattungsgemäßen Verfahren zum Messen eines Abstands eines Objekts nach dem Laufzeitprinzip, bei demLichtpulse in einen Überwachungsbereich ausgesendet werden,mit einer Empfangseinheit von einem Objekt im Überwachungsbereich zurückgestrahlte Lichtpulse nachgewiesen werden undein Abstand zu dem Objekt anhand einer Laufzeit der Lichtpulse bestimmt wird,wobei eine Grundkorrektur eines Empfangszeitpunkts des jeweiligen Lichtpulses durchgeführt wird,wobei eine Intensität von auf die Empfangseinheit oder einen Fotodetektor in der Nachbarschaft von der Empfangseinheit einkommendem Fremdlicht festgestellt wird undwobei in Abhängigkeit von der festgestellten Intensität des Fremdlichts eine Fremdlichtkorrektur der Empfangszeitpunkte der nachgewiesenen Lichtpulse durchgeführt wird,dadurch gekennzeichnet ,dass die Grundkorrektur eines Empfangszeitpunkts eines nachgewiesenen Lichtpuls in Abhängigkeit von einer für den nachgewiesenen Lichtpuls jeweils festgestellten Pulsbreite durchgeführt wird unddass die Fremdlichtkorrektur des Empfangszeitpunkts eines nachgewiesenen Lichtpulses durchgeführt wird in Abhängigkeit von der für den betreffenden Lichtpuls festgestellten Pulsbreite.

Ein gattungsgemäßer Optischer Sensor zum Messen eines Abstands eines Objekts nach dem Laufzeitprinzip, zur Durchführung der oben offenbarten Verfahren,mit einer Sendeeinheit zum Aussenden von Lichtpulsen in einen Überwachungsbereich,mit einer Empfangseinheit zum Nachweisen von von einem Objekt im Überwachungsbereich zurückgestrahlten Lichtpulsen undmit einer Steuer- und Auswerteeinheit zum Ansteuern der Sendeeinheit und der Empfangseinheit und zum Auswerten von von der Empfangseinheit nachgewiesenen Lichtpulsen,wobei die Steuer- und Auswerteeinheit dazu eingerichtet ist,zur Bestimmung jeweils von effektiven Empfangszeitpunkten der nachgewiesenen Lichtpulse, in Abhängigkeit von einer für einen nachgewiesenen Lichtpuls festgestellten Pulsbreite eine Grundkorrektur eines Empfangszeitpunkts dieses Lichtpulses durchzuführen undeinen Abstand zu dem Objekt anhand der Laufzeit der Lichtpulse zu bestimmen,wobei die Steuerund Auswerteeinheit dazu eingerichtet ist,eine Intensität von auf die Empfangseinheit oder einen Fotodetektor in der Nachbarschaft der Empfangseinheit einkommendem Fremdlicht auszuwerten und in Abhängigkeit von der festgestellten Intensität des Fremdlichts eine Fremdlichtkorrektur der Empfangszeitpunkte der nachgewiesenen Lichtpulse durchzuführen,dadurch gekennzeichnet ,dass die Steuer- und Auswerteeinheit weiterhin dazu eingerichtet ist, die Grundkorrektur eines Empfangszeitpunkts (t1, t2) eines nachgewiesenen Lichtpuls in Abhängigkeit von einer für den nachgewiesenen Lichtpuls jeweils festgestellten Pulsbreite durchzuführen und die Fremdlichtkorrektur des Empfangszeitpunkts eines nachgewiesenen Lichtpulses in Abhängigkeit von der für den betreffenden Lichtpuls festgestellten Pulsbreite durchzuführen.

Ein gattungsgemäßes Verfahren und ein gattungsgemäßer optischer Sensor sind bekannt beispielsweise aus DE 103 56 797 A1, JP 2021 076589 A und US 2019/250257 A1.Als eine Aufgabe der Erfindung kann angesehen werden, ein Verfahren und einen optischen Sensor der oben angegebenen Art zu schaffen, mit welchen auch bei Eintrag von Fremdlicht eine gute Messgenauigkeit erreicht wird.

Diese Aufgabe wird durch das Verfahren mit den Merkmalen des Anspruchs 1 und durch den optischen Sensor mit den Merkmalen des Anspruchs 13 gelöst.

Das Verfahren der oben angegebenen Art ist erfindungsgemäß dadurch weitergebildet, dass eine Intensität von auf die Empfangseinheit oder einen Fotodetektor in der Nachbarschaft von der Empfangseinheit einkommendem Fremdlicht festgestellt wird und dass in Abhängigkeit von der festgestellten Intensität des Fremdlichts eine Fremdlichtkorrektur der Empfangszeitpunkte der nachgewiesenen Lichtpulse durchgeführt wird.

Der optische Sensor der oben angegebenen Art ist erfindungsgemäß dadurch weitergebildet, dass die Steuer- und Auswerteeinheit dazu eingerichtet ist, eine Intensität von auf die Empfangseinheit oder einen Fotodetektor in der Nachbarschaft von der Empfangseinheit einkommendem Fremdlicht auszuwerten und in Abhängigkeit von der festgestellten Intensität des Fremdlichts eine Fremdlichtkorrektur der Empfangszeitpunkte der nachgewiesenen Lichtpulse durchzuführen.

Vorteilhafte Ausgestaltungen des erfindungsgemäßen Verfahrens und bevorzugte Ausführungsbeispiele des erfindungsgemäßen optischen Sensors werden im Folgenden, insbesondere im Zusammenhang mit den abhängigen Ansprüchen und den Figuren erläutert.

Als Sendeeinheit können grundsätzlich bekannte Komponenten verwendet werden, welche die Lichtpulse mit der gewünschten Intensität im gewünschten Spektralbereich und mit der gewünschten Zeitstruktur aussenden können. Typischerweise werden Leuchtdioden oder Laser, insbesondere Halbleiterlaser, verwendet, die im Infrarot-Bereich oder im sichtbaren Bereich strahlen.

Die Messung eines Abstands zu einem zurückstrahlenden Objekt nach dem Laufzeitprinzip ist bekannt. Dabei wird unter Verwendung der Lichtgeschwindigkeit c in dem betreffenden Medium, typischerweise Luft, und der Differenz zwischen einem Aussendezeitpunkt ts und einem Empfangszeitpunkt tr der Abstand d des zurückstrahlenden Objekts bestimmt wie folgt:

$$d = (t_r - t_s)/2c.$$

Üblicherweise werden zur Verbesserung der Messstatistik viele Abstandsmessungen addiert.

Mit dem Begriff des Überwachungsbereichs ist derjenige Raumbereich gemeint, in dem sich nachzuweisende Objekte befinden können und der optisch von dem Sensor erfasst werden kann. Die Sendeeinheit ist also so positioniert, dass Lichtpulse in den Überwachungsbereich gestrahlt werden können, und die Empfangseinheit ist so positioniert, dass Lichtpulse aus dem Überwachungsbereich empfangen werden können.

Zum Nachweisen von Lichtpulsen, die aus dem Überwachungsbereich kommend auf die Empfangseinheit eintreffen, beinhaltet die Empfangseinheit mindestens einen Lichtdetektor. Dabei können grundsätzlich bekannte Komponenten verwendet werden. Bevorzugt kommen Halbleiterdetektoren, beispielsweise CMOS-, CCD-, SPAD-, oder MPPC-Detektoren zum Einsatz (SPAD=Single-Photon Avalanche Diode, MPPC=Multi Pixel Photon Counter). Bei bestimmten Ausführungsformen des erfindungsgemäßen optischen Sensors können auch eine Vielzahl solcher Detektoren vorhanden sein, beispielsweise in einer Zeilenanordnung oder in einer zweidimensionalen Matrixanordnung.

Die Sendeeinheit kann in grundsätzlich bekannter Art optische Komponenten, wie Linsen, Spiegel und/oder Lichtleitfasern, aufweisen zum Führen und/oder Leiten der Lichtpulse in den Überwachungsbereich. Ebenso kann die Empfangseinheit in grundsätzlich bekannter Art optische Komponenten, wie Linsen, Spiegel und/oder Lichtleitfasern, aufweisen zum Führen und/oder Leiten der aus dem Überwachungsbereich einkommenden Lichtpulse auf einen in der Empfangseinheit vorhandenen Lichtdetektor.

Als Steuer- und Auswerteeinheit zum Ansteuern der Sendeeinheit und der Empfangseinheit und zum Auswerten der von der Empfangseinheit nachgewiesenen Lichtpulse können bekannte Komponenten, beispielsweise Mikrocontroller oder andere programmierbare Komponenten, zum Einsatz kommen.

Die Steuer- und Auswerteeinheit kann zur Durchführung des erfindungsgemäßen Verfahrens eingerichtet sein.

Mit Zurückstrahlen ist gemeint, dass mindestens ein Teil der Energie der Lichtpulse, die auf ein Objekt treffen, zurück auf die Empfangseinheit gestrahlt wird. Üblicherweise sind die Empfangseinheit und die Sendeeinheit in ein und demselben Gehäuse aufgenommen. Grundsätzlich möglich sind aber auch Ausführungsvarianten, bei denen Empfangseinheit und Sendeeinheit in unterschiedlichen Gehäusen und eventuell an unterschiedlichen Orten positioniert sind.

Bei Laufzeitmessungen hängt die gemessene Laufzeit wesentlich auch von der Amplitude eines nachgewiesenen Lichtpulses, der auch als Echosignal bezeichnet wird, ab. Üblicherweise wird das Echosignal erst ab einer bestimmten Intensitätsschwelle oder Amplitudenschwelle detektiert. Demnach überschreiten schwache Echosignale im Vergleich zu stärkeren Echosignalen diese Intensitätsschwelle erst später und führen deshalb zu einer längeren Laufzeit gemessen ab dem Startsignal. Ein durch die Amplitude bedingter Messfehler kann beispielsweise bestimmt werden, indem Messungen mit Targets unterschiedlicher Reflektivität aber gleichem Abstand zum Messsystem durchgeführt werden.

Die Korrekturen, also die Grundkorrektur und die Fremdlichtkorrektur, der Empfangszeitpunkte können Verwendung einer festgestellten Amplitude eines nachgewiesenen Lichtpulses durchgeführt werden. Erfindungsgemäß werden die Pulsbreiten der nachgewiesenen Lichtpulse festgestellt und die Grundkorrektur erfolgt in Abhängigkeit der festgestellten Pulsbreite. Die Steuer- und Auswerteeinheit ist dann bevorzugt zum Feststellen der Pulsbreite der nachgewiesenen Lichtpulse eingerichtet. Mit Feststellen der Pulsbreiten der nachgewiesenen Lichtpulse ist gemeint, dass die Steuer- und Auswerteeinheit aus den Intensitätsverläufen der nachgewiesenen Lichtpulse einen quantitativen Wert ermittelt, der eine Pulsbreite der nachgewiesenen Lichtpulse charakterisiert. Je nachdem, wie groß die Pulsbreite für einen bestimmten nachgewiesenen Lichtpulse ist, wird für den Empfangszeitpunkt dieses Lichtpulses bei dieser Variante eine Grundkorrektur des Empfangszeitpunkts durchgeführt.

Als Fremdlicht wird jede Art von Licht bezeichnet, welches in der Empfangseinheit Nachweissignale bewirkt und welches nicht von Lichtpulsen herrührt, die aus dem Überwachungsbereich zurückgestrahlt werden. Wesentliche und typische Quellen von Fremdlicht sind Tageslicht und künstliches Licht am Ort der Empfangseinheit, beispielsweise in einer Fabrikhalle.

Ziel der Korrekturen der Empfangszeitpunkte, sowohl der Grundkorrektur als auch der Fremdlichtkorrektur, ist die Bestimmung eines effektiven Empfangszeitpunkts, der dann zusammen mit dem Aussendezeitpunkt des betreffenden Lichtpulses zur Berechnung der Laufzeit und damit des Abstands dient. Der effektive Empfangszeitpunkt ist also ein korrigierter Empfangszeitpunkt, der zu einem mit einer geringeren Messunsicherheit behafteten Messergebnis führen soll.

Ganz allgemein ist eine Korrektur des Empfangszeitpunkts äquivalent zu einer Korrektur des gemessenen Abstands.

Die Einstrahlung von Fremdlicht führt naturgemäß zu Veränderungen der Nachweissignale der Empfangseinheit.

Als eine erste wichtige Erkenntnis der Erfindung kann angesehen werden, dass die Korrekturen der Empfangszeitpunkte auf die Intensität des Fremdlichts empfindlich reagieren. Weil sich die Amplituden und die Pulsbreiten der nachgewiesenen Lichtpulse in Abhängigkeit des Fremdlicht ändern, spielt die Intensität des Fremdlichts insbesondere eine Rolle, wenn die Korrekturen der Empfangszeitpunkte in Abhängigkeit der für die jeweiligen Lichtpulse festgestellten Pulsbreite durchgeführt werden.

Eine weitere wichtige Erkenntnis der Erfindung ist, dass die Genauigkeit der Abstandsbestimmung deutlich gesteigert werden kann, wenn die Wirkungen des Fremdlichts berücksichtigt werden.

In diesem Zusammenhang kann als grundlegende Idee der Erfindung angesehen werden, die Intensität von auf die Empfangseinheit einkommendem Fremdlicht festzustellen und sodann in Abhängigkeit einer festgestellten Intensität des Fremdlichts eine weitere Korrektur der Empfangszeitpunkte der nachgewiesenen Lichtpulse durchzuführen. Diese weitere Korrektur wird als Fremdlichtkorrektur bezeichnet.

Die an sich bekannte Korrektur eines Empfangszeitpunkts unter Verwendung einer Pulsform des nachgewiesenen zurückgestrahlten Lichtpulses wird also bei der vorliegenden Erfindung erweitert durch eine Kompensation von Einflüssen von Fremdlicht. Zu diesem Zweck wird erfindungsgemäß eine Intensität des Fremdlichts festgestellt.

Zum Feststellen der Intensität des Fremdlichts kann ein Messsignal der Empfangseinheit selbst ausgewertet werden. Es kann dazu aber auch ein separater Photodetektor vorhanden sein, der sich in der Nachbarschaft der Empfangseinheit befindet und zum Messen der Intensität des Fremdlichts verwendet wird.

Als ein wesentlicher Vorteil der vorliegenden Erfindung kann angesehen werden, dass durch die Berücksichtigung des Fremdlichts die durch das Verfahren und den optischen Sensor bereitgestellte Messgenauigkeit gesteigert wird und zusätzliche Einsatzmöglichkeiten für das Verfahren und den optischen Sensor geschaffen werden.

Der erfindungsgemäße optische Sensor ist insbesondere zur Durchführung des erfindungsgemäßen Verfahrens geeignet und eingerichtet.

Der erfindungsgemäße optische Sensor kann ein einzelner optischer Sensor zum Messen eines Abstands eines Objekts in einer unveränderlichen Richtung im Raum sein. Die Richtung, in welcher ein Abstand gemessen wird, kann auch variiert werden. Beispielsweise kann der erfindungsgemäße optische Sensor ein 2D- oder 3D-Scanner sein.

Unter Verwendung einer Annahme über die Pulsform der zurückgestrahlten Lichtpulse kann aus einer gemessenen Amplituden eines Lichtpulses auf die Pulsbreite des Lichtpulses zurückgeschlossen werden. Alternativ oder zusätzlich wird bei einer bevorzugten Variante des erfindungsgemäßen Verfahrens eine Pulsbreite eines nachgewiesenen Lichtpulses ermittelt durch Vergleich des, insbesondere digitalisierten, Empfangssignals mit einer Intensitätsschwelle.

Mit anderen Worten werden die Pulsbreiten der nachgewiesenen Lichtpulse zwischen der ansteigenden Flanke und der abfallenden Flanke des nachgewiesenen Lichtpulses gemessen. Schwache zurückgestrahlte Lichtpulse, also schwache Echosignale, haben dann eine kleinere Pulsbreite als stärkere Echosignale. Die Pulsbreite und die Amplitude eines Pulses hängen somit über eine monotone Funktion miteinander zusammen. Die so definierte Pulsbreite des Echosignals ist somit ein Maß für die Amplitude und kann zur Laufzeitkorrektur verwendet werden.

Erfindungsgemäß wird die Fremdlichtkorrektur des Empfangszeitpunkts eines nachgewiesenen Lichtpulses in Abhängigkeit von der für den betreffenden Lichtpuls festgestellten Pulsbreite durchgeführt. Zusätzlich kann die Fremdlichtkorrektur der Empfangszeitpunkte anhand der Amplituden der nachgewiesenen Lichtpulse durchgeführt werden.

Zur Grundkorrektur des Empfangszeitpunkts kann eine beliebige mathematische Operation auf den Empfangszeitpunkt angewendet werden. Bei einer bevorzugten Variante des erfindungsgemäßen Verfahrens wird bei der Grundkorrektur des Empfangszeitpunkts eines nachgewiesenen Lichtpulses von dem Empfangszeitpunkt ein Korrekturwert subtrahiert, der von der für den betreffenden Lichtpuls festgestellten Pulsbreite abhängig ist.

Auch zur Fremdlichtkorrektur des Empfangszeitpunkts kann eine beliebige mathematische Operation auf den Empfangszeitpunkt angewendet werden. Bei einer weiteren bevorzugten Variante des erfindungsgemäßen Verfahrens wird bei der Fremdlichtkorrektur des Empfangszeitpunkts eines nachgewiesenen Lichtpulses von dem Empfangszeitpunkt ein Korrekturwert subtrahiert, der von der für den betreffenden Lichtpuls festgestellten Pulsbreite und von einer festgestellten Intensität des Fremdlichts abhängig ist.

Die Grundkorrektur und die Fremdlichtkorrektur können nacheinander, also sequenziell, durchgeführt werden. Dabei wird beispielsweise ein erster, die Grundkorrektur bewirkender Korrekturwert von dem Empfangszeitpunkt abgezogen und anschließend wird ein zweiter, die Fremdlichtkorrektur bewirkender Korrekturwert von dem, schon grundkorrigierten, Empfangszeitpunkt abgezogen. Die Reihenfolge, in der die Grundkorrektur und die Fremdlichtkorrektur durchgeführt werden, ist grundsätzlich beliebig.

Prinzipiell ist es aber auch möglich, dass die Grundkorrektur und die Fremdlichtkorrektur als eine einheitliche Korrektur des Empfangszeitpunkts durchgeführt werden.

Beispielsweise wird bei der einheitlichen Korrektur des Empfangszeitpunkts eines nachgewiesenen Lichtpulses von dem Empfangszeitpunkt ein von der für den betreffenden Lichtpuls festgestellten Pulsbreite abhängiger Korrekturwert subtrahiert, der von der Pulsbreite und von der festgestellten Intensität des Fremdlichts abhängig ist.

Feststellen der Fremdlichtintensität bedeutet das Messen mindestens einer Größe, die mit der Intensität des Fremdlichts am Ort der Empfangseinheit in einem monotonen Zusammenhang steht. Grundsätzlich ist es möglich, für das Messen der Fremdlichtintensität einen separaten Photodetektor innerhalb der Empfangseinheit oder in der Nachbarschaft der Empfangseinheit zu verwenden. Bei einer besonders bevorzugten Ausführungsform der Erfindung wird zum Feststellen der Fremdlichtintensität derselbe Detektor verwendet, der auch zum Nachweisen der zurückgestrahlten Lichtpulse verwendet wird. Eine Intensität des Fremdlichts kann beispielsweise festgestellt werden durch Messen eines Fotostroms des eines Detektors. Beispielsweise kann der Photostrom gemessen werden durch Messung eines Spannungsabfalls an einem Spannungsteiler.

Bei der Fertigung von gattungsgemäßen optischen Sensoren werden die Korrekturwerte üblicherweise durch eine sogenannte Shutterfahrt bestimmt. Dabei befindet sich ein Target mit bekannter Reflektivität in einem festen Abstand vor dem optischen Sensor. Die von diesem Target zurückgestrahlten Lichtpulse werden durch einen Graukeil in mehreren Stufen abgeschwächt und die so abgeschwächten Lichtpulse werden jeweils vermessen. Man erhält so bei konstanter Entfernung des Targets für unterschiedliche Pulsformen, nämlich Amplituden und Pulsbreiten, der zurückgestrahlten nachgewiesenen Lichtpulse. Aus den Amplituden und/oder den Pulsbreiten können somit die jeweils notwendigen Korrekturwerte zur Korrektur des Empfangszeitpunkts bestimmt werden. Diese Shutterfahrt kann auch bei mehreren Entfernungen durchgeführt werden.

Zur Bestimmung der Korrekturwerte in Abhängigkeit von der Pulsbreite des Echosignals sind auch andere Verfahren möglich. Beispielsweise können die Korrekturwerte mit einem Target bekannter Reflektivität bei unterschiedlichen, jeweils bekannten, Entfernungen durchgeführt werden. Möglich ist außerdem die Messung gegen Targets unterschiedlicher Reflektivität bei festem Abstand.

Bevorzugt werden vor dem eigentlichen Meßbetrieb für eine Mehrzahl von, insbesondere gezielt eingestellten oder simulierten, Intensitäten des Fremdlichts und/oder für verschiedene Reflektivitäten und/oder Abstände eines Testobjekts Korrekturwerte für verschiedene Pulsbreiten der nachgewiesenen Lichtpulse bestimmt und abgespeichert. Die Korrekturwerte können in Tabellen gespeichert werden. Die Steuer- und Auswerteeinheit weist dazu zweckmäßig eine Speichereinrichtung auf.

Grundsätzlich ist es möglich, diese Einlernvorgänge, die auch als Shutterfahrten bezeichnet werden, für unterschiedliche gezielt eingestellte Intensitäten oder Pegel von Fremdlicht durchzuführen.

Bei einer besonders bevorzugten Variante der Erfindung wird stattdessen bei der Einrichtung des optischen Sensors zur Simulation von unterschiedlichen Intensitäten des Fremdlichts ein Parameter oder Ansteuerparameter der der Empfangseinheit, beispielsweise eine Vorspannung der Empfangseinheit, variiert.

Die definierte Variation beispielsweise einer Vorspannung ist leichter und weniger aufwändig zu verwirklichen als die definierte Variation von Fremdlichtpegeln. Voraussetzung für diese Ausgestaltung ist, dass die Variation des betreffenden Ansteuerparameters oder Parameters, beispielsweise die Variation der Vorspannung, mindestens in dem Wertebereich des Parameters, in dem dieser variiert wird, im Wesentlichen dieselbe Wirkung auf das Messergebnis der Empfangseinheit hat, wie ein Fremdlichteintrag.

Zur mindestens partiellen Kompensierung von Effekten von Fremdlicht kann eine Ansteuerung eines Detektors in der Empfangseinheit in Abhängigkeit einer festgestellten Intensität des Fremdlicht angepasst werden. Bei einer bevorzugten Variante des erfindungsgemäßen Verfahrens erfolgt aber gerade keine Veränderung der Ansteuerung, sondern die Ansteuerung der Empfangseinheit, insbesondere eine Ansteuerung eines Fotodetektors, wird vielmehr nicht in Abhängigkeit einer Intensität des Fremdlichts geändert. Es hat sich gezeigt, dass die Korrekturen des Empfangszeitpunkts so zuverlässiger bewerkstelligt werden können.

Weitere Merkmale und Vorteile der Erfindung werden im Folgenden im Zusammenhang mit den beigefügten Figuren erläutert. Darin zeigen:

Figur 1:     eine schematische Darstellung eines erfindungsgemäßen optischen Sensors;

Figur 2:     ein Diagramm zur Erläuterung der Begriffe nachgewiesener Lichtpuls, Pulsbreite, Intensitätsschwelle.

Figur 3:     ein Diagramm, in dem die Änderung der gemessenen scheinbaren Entfernung gegen die Breite des reflektierten Pulses aufgetragen ist;

Figur 4:     eine schematische Darstellung der Beschaltung eines Detektors in der Empfangseinheit eines optischen Sensors;

Figur 5:     ein Diagramm, in dem die Änderung der Spannung bei Vm gegen die Intensität/den Pegel des Fremdlichts aufgetragen ist;

Figur 6:     ein Diagramm, in dem die Breite des reflektierten Pulses gegen die Intensität/Pegel des Fremdlichts aufgetragen ist;

Figur 7:     ein Diagramm, in dem Korrekturwerte für verschiedene Unterspannungen bei Vm entsprechend verschiedenen Intensitäten/Pegeln des Fremdlichts gegen die Breite des reflektierten Pulses aufgetragen sind;

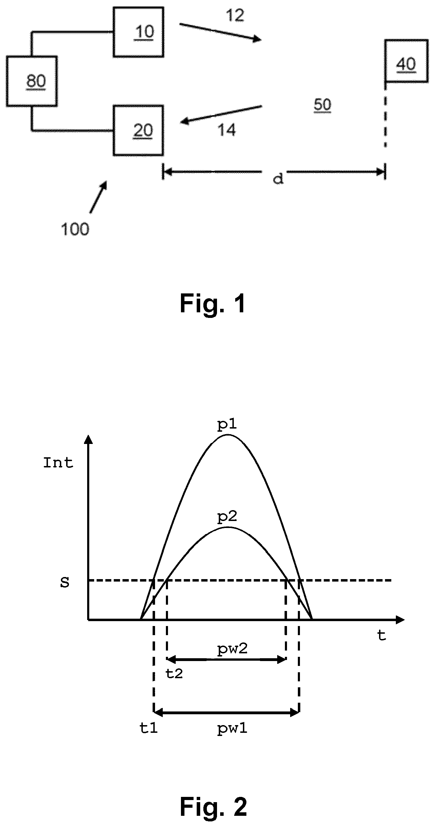

Ein Ausführungsbeispiel eines erfindungsgemäßen optischen Sensors 100 und eine Variante des erfindungsgemäßen Verfahrens werden mit Bezug auf die Figuren 1 bis 7 erläutert.

Der in Figur 1 schematisch dargestellte erfindungsgemäße optische Sensor 100 zum Messen eines Abstands d eines Objekts 40 nach dem Laufzeitprinzip beinhaltet als wesentliche Komponenten eine Sendeeinheit 10, eine Empfangseinheit 20 und eine Steuer- und Auswerteeinheit 80.

Die Sendeeinheit 10 dient zum Aussenden von Lichtpulsen 12 in einen Überwachungsbereich 50 und weist dazu mindestens eine Lichtquelle, typischerweise mindestens eine Leuchtdiode oder mindestens eine Laserdiode auf. Die Empfangseinheit 20 dient primär zum Nachweisen von Lichtpulsen 14, die von einem Objekt 40 im Überwachungsbereich 50 zurückgestrahlt werden und weist dazu mindestens einen Photodetektor, beispielsweise mindestens einen MMPC-Detektor, auf. Außerdem dient die Empfangseinheit 20 bei diesem Ausführungsbeispiel zum Feststellen einer Intensität von Fremdlicht, beispielsweise von Tageslicht oder künstlichem Licht am Ort des optischen Sensors 100.

Die Steuer- und Auswerteeinheit 80 kann beispielsweise ein Mikrocontroller sein und dient erfindungsgemäß zum Ansteuern der Sendeeinheit 10 und der Empfangseinheit 20 und zum Auswerten von von der Empfangseinheit 20 nachgewiesenen Lichtpulsen. 14. Die Steuer- und Auswerteeinheit 80 weist im Ausführungsbeispiel eine in Figur 1 nicht separat dargestellte Speichereinrichtung auf, in welcher Korrekturtabellen zur Korrektur der Empfangszeitpunkte in Abhängigkeit einer festgestellten Intensität des Fremdlichts und in Abhängigkeit von Parametern der Pulsform der nachgewiesenen Lichtpulse, beispielsweise Amplitude und/oder Pulsbreite, gespeichert sind.

Die Steuer- und Auswerteeinheit 80 ist erfindungsgemäß dazu eingerichtet, zur Bestimmung jeweils von effektiven Empfangszeitpunkten der nachgewiesenen Lichtpulse eine Grundkorrektur der Empfangszeitpunkte der Lichtpulse durchzuführen und einen Abstand d zu dem Objekt 40 anhand der Laufzeit der Lichtpulse zu bestimmen.

Mit der Lichtgeschwindigkeit c in dem betreffenden Medium, typischerweise Luft, und der Differenz zwischen einem Aussendezeitpunkt ts und einem Empfangszeitpunkt tr wird der Abstand d des zurückstrahlenden Objekts bestimmt:

$$d = (tr-ts)/2c.$$

Außerdem ist die Steuer- und Auswerteeinheit 80 dazu eingerichtet, eine Intensität von auf die Empfangseinheit 20 einkommendem Fremdlicht auszuwerten und in Abhängigkeit von der festgestellten Intensität des Fremdlichts eine Fremdlichtkorrektur der Empfangszeitpunkte der nachgewiesenen Lichtpulse durchzuführen.

Für die Bestimmung der Laufzeit und damit des Abstands wird dann der korrigierte Empfangszeitpunkt verwendet, der auch als effektiver Empfangszeitpunkt te bezeichnet wird.

Der optische Sensor 100 des Ausführungsbeispiels und insbesondere die Steuer- und Auswerteeinheit 80 sind zur Durchführung des erfindungsgemäßen Verfahrens geeignet und eingerichtet.

Einige für die Korrektur des Empfangszeitpunkts wesentliche Begriffe werden anhand des Diagramms in Figur 2 erläutert. In Figur 2 sind schematisch ein erster empfangener Lichtpuls p1 und ein zweiter empfangener Lichtpuls p2 dargestellt jeweils als Verlauf der Intensität Int gegen die Zeit t. Die Intensität ist dabei eine von einem Photodetektor nachgewiesene und gegebenenfalls verstärkte Intensität. Die Amplitude des Lichtpulses p1 ist größer als diejenige des Lichtpulses p2. Beispielsweise können die Lichtpulse p1 und p2 zurückgehen auf zwei Testobjekte mit unterschiedlicher Reflektivität, die in demselben Abstand d vor dem optischen Sensor 100 positioniert werden. Das Testobjekt mit der geringeren Reflektivität bewirkt den Lichtpuls p2, dasjenige mit der höheren Reflektivität den Lichtpuls p1. Als Empfangszeitpunkt eines Lichtpulses kann derjenige Zeitpunkt gewertet werden, zu dem der Intensitätsverlauf des Lichtpulses eine Intensitätsschwelle durchstößt. Für die Lichtpulse p1 und p2 sind dass die Zeitpunkte t1 beziehungsweise t2. Wie ersichtlich, führt die geringere Amplitude des Lichtpulses p2 dazu, dass dieser den Schwellwert S zu einem im Vergleich zu t1 späteren Zeitpunkt t2 erreicht. Trotz der nominal identischen Abstände der beiden Testobjekte erhielte man also unterschiedliche Empfangszeitpunkte der zurückgestrahlten Lichtpulse, damit unterschiedliche Laufzeiten und unterschiedliche Abstände.

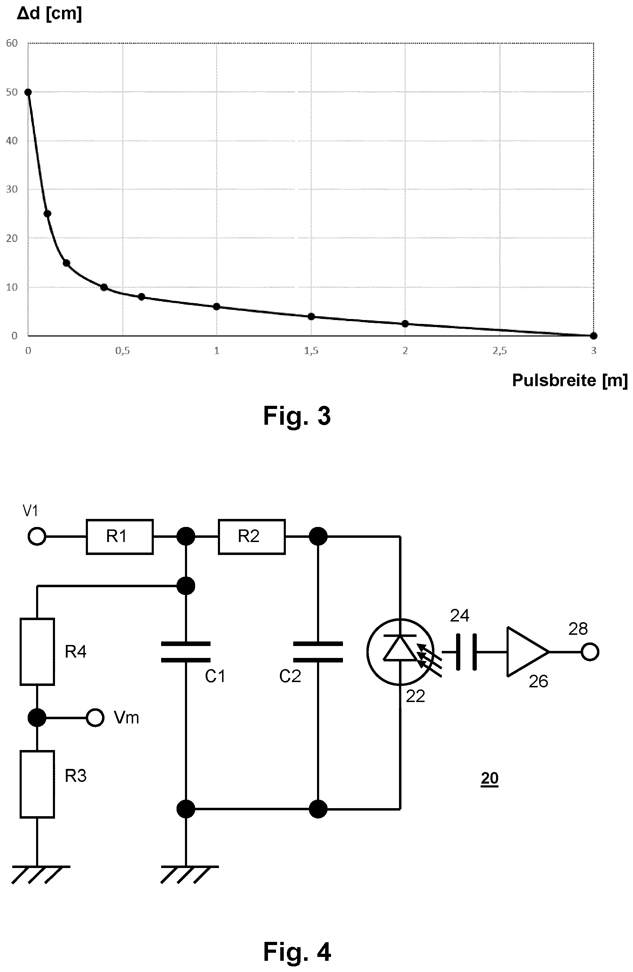

Figur 3 zeigt ein Diagramm, in dem Messresultate für ein Testobjekt in konstantem Abstand von dem optischen Sensor mit jeweils unterschiedliche Abschwächung des zurückgestrahlten Pulses durch einen Graukeil dargestellt sind. Dargestellt ist die Änderung Δd des gemessenen scheinbaren Abstands in cm auf der vertikalen Achse gegen die Pulsbreite PW des nachgewiesenen reflektierten Lichtpulses in m auf der horizontalen Achse. Die Änderung Δd des gemessenen Abstands ist nur scheinbar, weil sich der Abstand des Testobjekts in Wirklichkeit nicht ändert. Die Pulsbreite in Zeiteinheiten erhält man durch die Pulsbreite PW in Metern dividiert durch die Lichtgeschwindigkeit in dem betreffenden Medium, typischerweise Luft.

Die Änderung Δd des gemessenen scheinbaren Abstands ist auf die Lichtpulse maximaler Intensität bezogen. Im Beispiel der Figur 3 weisen diese Lichtpulse eine Pulsbreite von 3m auf. Die Änderung Δd des gemessenen scheinbaren Abstands bei einer Pulsbreite von 3m ist also 0. Mit zunehmender Abschwächung der Lichtpulse durch den Graukeil, nimmt die Amplitude und nimmt entsprechend auch die Pulsbreite PW des nachgewiesenen Lichtpulses ab. Der Durchstoßpunkt durch die Intensitätsschwelle S (siehe Figur 2) verschiebt sich zu späteren Zeitpunkten und entsprechend steigt der gemessene scheinbare Abstand. Das Diagramm in Figur 3 zeigt dies: mit abnehmender Pulsbreite steigt die gemessene Änderung des scheinbaren Abstands von 0 cm bei der Pulsbreite 3m über etwa 6 cm bei einer Pulsbreite von 1m auf ca. 50cm bei einer Pulsbreite von nahezu 0.

Eine Grundkorrektur dieses systematischen Messfehlers ist möglich unter Verwendung der Pulsbreite der nachgewiesenen Lichtpulse p1, p2. Die Pulsbreite ist dabei definiert durch die Zeitdifferenz zwischen den Zeitpunkten, zu denen der Intensitätsverlauf eines nachgewiesenen Pulses gleich groß ist wie die der Schwellwert S. Für den ersten nachgewiesenen Lichtpuls p1 erhält man die Pulsbreite pw1 und für den zweiten nachgewiesenen Lichtpuls p2 mit geringerer Amplitude die kleinere Pulsweite pw2. Bei im wesentlichen gleicher Pulsform steigt also die so definierte Pulsbreite monoton mit der Amplitude. Eine Korrektur des durch die unterschiedlichen Amplituden oder, äquivalent dazu, durch die unterschiedlichen Pulsbreiten der nachgewiesenen Lichtpulse verursachten systematischen Messfehlers ist möglich, indem beispielsweise von dem Empfangszeitpunkt t2 die Differenz zwischen t2 und t1 subtrahiert wird und demgemäß für den zweiten nachgewiesenen Lichtpuls p2 te = t1 als effektiver Empfangszeitpunkt erhalten wird. Die Korrektur für den ersten nachgewiesenen Lichtpuls p1 wäre in dieser Definition 0, d. h. für den ersten nachgewiesenen Lichtpuls würde ebenfalls gelten te = t1.

Bevorzugt wird die Grundkorrektur eines Empfangszeitpunkts t1, t2 eines Lichtpulses p1, p2 also in Abhängigkeit von einer für den betreffenden Lichtpuls p1, p2 festgestellten Pulsbreite pw1, pw2 durchgeführt.

Ein Beispiel einer Fremdlichtkorrektur wird mit Bezug auf die Figuren 4 bis 7 erläutert.

Figur 4 zeigt ein Beispiel einer Beschaltung eines Fotodetektors 22, beispielsweise eines MPPC-Detektors. In diesem Zusammenhang wird auch beschrieben, wie die Intensität des Fremdlichts festgestellt werden kann. Der Photodetektor 22 ist durch Anlegen einer konstanten positiven Spannung bei V1 in Sperrrichtung geschaltet und wird durch Bestrahlung mit Licht leitend. Ein Detektionssignal wird in diesem Ausführungsbeispiel wechselstrommäßig über eine Kapazität 24 ausgekoppelt und an einen Verstärker 26 gegeben. Am Ausgang des Verstärkers 28 steht ein verstärktes Signal zur weiteren Verarbeitung durch die Steuer- und Auswerteeinheit 80 zur Verfügung.

Ein durch Bestrahlung des Photodetektor 22 mit Licht generierter Fotostrom bewirkt in dem Spannungsteiler R1/R2 einen zum Fotostrom und damit zur Intensität des einfallenden Lichts proportionalen Spannungsabfall. Typischerweise ist R2 viel größer als R1. Diese Spannung wird zwischen R1 und R2 abgegriffen und zu dem weiteren Spannungsteiler R4/R3 geführt. Am Abgriff Vm steht eine geeignet skalierte Spannung zur Verfügung, die von einem Analog-Digital-Wandler der Steuer- und Auswerteeinheit 80 gemessen werden kann. Durch die Kapazitäten C1 und C2 werden höherfrequente Anteile kurzgeschlossen und die bei Vm gemessene Spannung kann so als Maß für das auf den Photodetektor 22 einkommende Fremdlicht verwendet werden. Je größer der Fremdlichteintrag auf den Photodetektor 22 ist, umso stärker sinkt die bei Vm gemessene Spannung. Im Vergleich zu einer Situation ohne jeglichen Fremdlichteintrag, bei der bei Vm eine dem Teilerverhältnis des Spannungsteilers R4/R3 entsprechende Teilspannungen von V1 gemessen wird, erhält man also bei nichtverschwindenden Fremdlichteintrag also eine Unterspannung bei Vm.

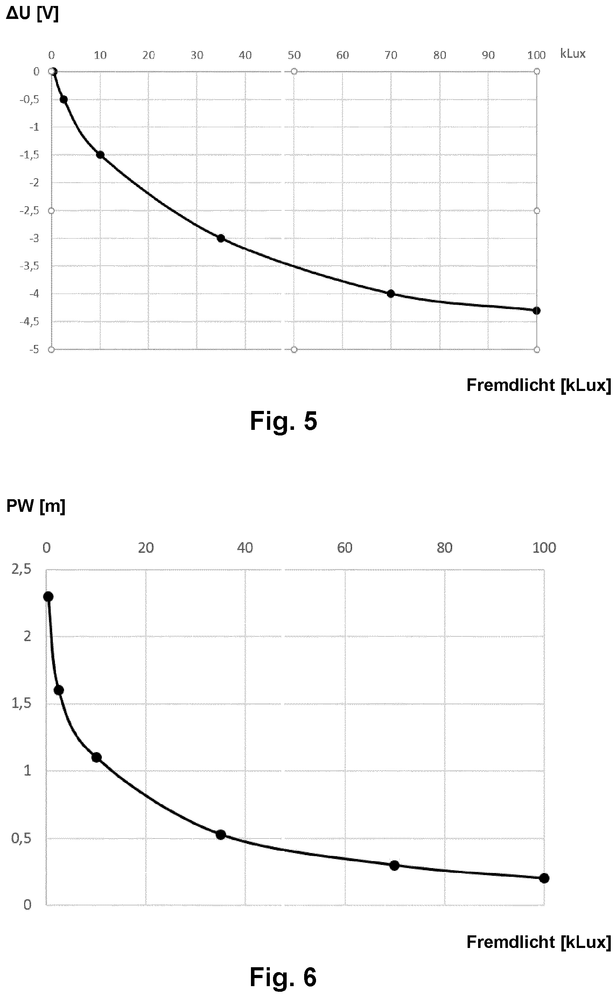

Figur 5 zeigt ein Diagramm, in dem die Änderung der Spannung bei Vm in Volt, also die Unterspannung, auf der vertikalen Achse gegen die Intensität/den Pegel des Fremdlichts in kLux auf der horizontalen Achse aufgetragen ist. Mit Änderung der Spannung ist dabei die Veränderung im Vergleich zur Situation ohne jeglichen Fremdlichteintrag gemeint. Figur 5 zeigt, dass mit zunehmender Intensität des Fremdlichts die Spannung bei Vm (siehe Figur 4) um bis zu etwa 4,3V bei einer Intensität des Fremdlichts von 100 kLux absinkt im Vergleich zur Situation ohne Fremdlichteintrag.

Diese veränderten Bedingungen für den Photodetektor 22 finden Niederschlag in den für ein und dasselbe Target in ein und demselben Abstand gemessenen Pulsbreiten der zurückgestrahlten nachgewiesenen Lichtpulse. Figur 6 verdeutlicht diesen Effekt in einem Diagramm, in dem die Breite des reflektierten Pulses in m auf der vertikalen Achse bei gleichem Target und gleichem Objektabstand gegen die Intensität/den Pegel des Fremdlichts in kLux auf der horizontalen Achse aufgetragen ist. Wie ersichtlich nimmt die Pulsbreite der nachgewiesenen reflektierten Lichtpulse mit zunehmender Intensität des Fremdlichts ab, und zwar im gezeigten Beispiel von etwa 2,3m ohne Fremdlichteintrag bis zu nur noch etwa 0,2m bei einer Intensität des Fremdlichts von 100kLux.

Wegen der im Zusammenhang mit Figur 2 erläuterten Wirkungen der Pulsbreite auf den Empfangszeitpunkt eines Lichtpulses ist damit klar, dass das Fremdlicht eine signifikante Fehlerquelle darstellt. Die Erfindung hat erkannt, dass auch diese Fehlerquelle aber weitgehend ausgeglichen werden kann.

Zusätzlich zu der Grundkorrektur wird bei diesem Ausführungsbeispiel der vorliegenden Erfindung der Abfall der Spannung am Empfänger aufgrund von Fremdlicht zur Korrektur des Empfangszeitpunkts oder, was äquivalent dazu ist, zur Korrektur des gemessenen Abstands verwendet.

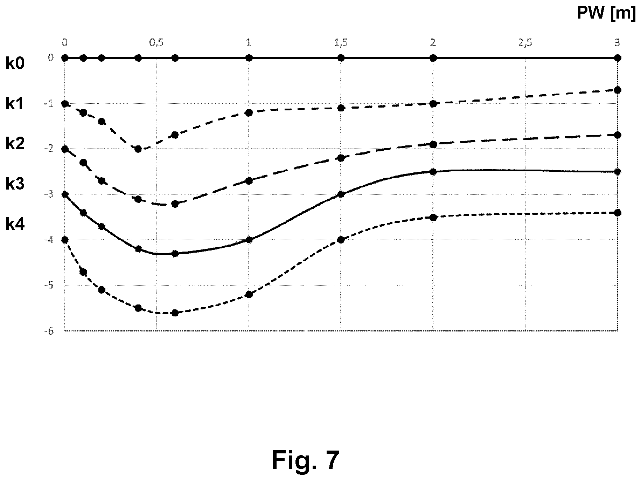

Ein Ausführungsbeispiel dazu wird im Zusammenhang mit Figur 7 erläutert. Figur 7 zeigt ein Diagramm, in dem Korrekturwerte in cm für verschiedene Intensitäten/Pegel des Fremdlichts auf der vertikalen Achse gegen die Breite des reflektierten Pulses in m auf der horizontale Achse aufgetragen sind. Die Korrekturwerte sind hier in Einheiten von cm angegeben, und können so direkt von einer gemessenen Entfernung subtrahiert werden. Die entsprechenden Korrekturwerte für den Empfangszeitpunkt würde man erhalten durch Division der Korrekturwerte in cm durch die Lichtgeschwindigkeit in dem relevanten Medium, beispielsweise Luft. Figur 7 zeigt Korrekturwerte für eine Situation, in der die Fremdlichtkorrektur und die Grundkorrektur sequenziell durchgeführt werden. Beispielsweise kann die Fremdlichtkorrektur nach der Grundkorrektur durchgeführt werden.

Figur 7 zeigt fünf verschiedene Korrekturkurven k0, k1, k2, k3 und k4, die zu verschiedenen Unterspannungen bei Vm gehören (siehe Beschreibung zu Figur 4). Die Korrekturkurve k0 gehört zur Unterspannung 0, d. h. zu verschwindendem Fremdlichteintrag. Die Korrekturkurven k1, k2, k3 und k4 gehören zu Unterspannungen -1V, -2V, 3V beziehungsweise -4V bei Vm. Wie ersichtlich, sind bei der Korrekturkurve k0 alle Korrekturwerte Null, es erfolgt also über die Grundkorrektur hinaus keine weitere Korrektur. Mit von der Korrekturkurve k1 zur Korrekturkurve k4 zunehmendem Fremdlichteintrag wachsen, wie aus Figur 7 ersichtlich, auch die jeweils für unterschiedliche Pulsbreiten zu subtrahierenden Korrekturwerte des Abstands.

Die Korrekturkurven k0, k1, k2, k3 und k4 können erhalten werden jeweils durch gezieltes Einstellen bestimmter Intensitäten des Fremdlichts.

Bei einer vorteilhaften Variante der Erfindung, die im Vergleich dazu leichter und unaufwändiger zu verwirklichen ist, wird stattdessen ein Parameter der Empfangseinheit 20, insbesondere die Vorspannung der Empfangseinheit 20 bei V1, (Figur 1) gezielt so variiert, dass sich bei Vm, wenn keine Lichtpulse gemessen werden, die für die Korrekturkurven k0, k1, k2, k3 und k4 oben angegebenen Unterspannungen einstellen.

Mit der vorliegenden Erfindung werden ein neuartiges Verfahren und ein neuartiger optischer Sensor zum Bestimmen eines Abstands eines Objekts nach dem Laufzeitprinzip vorgestellt, welche auch bei Fremdlichteintrag zuverlässige Abstandsmessungen ermöglichen.

<u>Bezugszeichenliste</u>

| | |
|---|---|
| 10 | Sendeeinheit |
| 12 | Lichtpulse, die in den Überwachungsbereich 50 ausgesendet werden |
| 14 | Lichtpulse, die von einem Objekt 40 zurückgestrahlt werden |
| 20 | Empfangseinheit |
| 22 | Fotodiode, Empfänger |
| 24 | Auskoppelkapazität |
| 26 | Verstärker |
| 28 | Ausgang |
| 40 | Objekt |
| 50 | Überwachungsbereich |
| 80 | Steuer- und Auswerteeinheit |
| 100 | optischer Sensor |

| | |
|---|---|
| c | Lichtgeschwindigkeit, insbesondere in Luft |
| C1 | Kapazität |
| C2 | Kapazität |
| d | Abstand des Objekts 40 zum optischen Sensor 100 |
| Int | Intensität in beliebigen Einheiten |
| k0 | Korrekturwerte in Abhängigkeit der Pulsbreite bei Fremdlichtpegel 0V |
| k1 | Korrekturwerte in Abhängigkeit der Pulsbreite bei Fremdlichtpegel -1V |
| k2 | Korrekturwerte in Abhängigkeit der Pulsbreite bei Fremdlichtpegel -2V |
| k3 | Korrekturwerte in Abhängigkeit der Pulsbreite bei Fremdlichtpegel -3V |
| k4 | Korrekturwerte in Abhängigkeit der Pulsbreite bei Fremdlichtpegel -4V |
| p1 | Intensitätsverlauf eines ersten nachgewiesenen Lichtpulses |
| p2 | Intensitätsverlauf eines zweiten nachgewiesenen Lichtpulses |
| PW | Pulsbreite eines nachgewiesenen Lichtpulses |
| pw1 | Pulsbreite des Lichtpulses p1 |
| pw2 | Pulsbreite des Lichtpulses p2 |
| R1 | ohmscher Widerstand |
| R2 | ohmscher Widerstand |
| R3 | ohmscher Widerstand |
| R4 | ohmscher Widerstand |
| S | Intensitätsschwelle |
| t | Zeit in beliebigen Einheiten |
| ts | Aussendezeitpunkt |
| tr | Empfangszeitpunkt |
| te | effektiver Empfangszeitpunkt |
| tc | Laufzeit |
| t1 | Empfangszeitpunkt des ersten Empfangspulses (=Zeitpunkt, zu dem p1=S auf der ansteigenden Flanke des Pulses) |
| t2 | Empfangszeitpunkt des zweiten Empfangspulses (=Zeitpunkt, zu dem p2=S auf der ansteigenden Flanke des Pulses) |
| V1 | Sperrspannung |
| Vm | Messspannung |
| $\Delta d$ | Änderung $\Delta d$ des gemessenen scheinbaren Abstands |

**Patentansprüche**

1. Verfahren zum Messen eines Abstands eines Objekts nach dem Laufzeitprinzip, bei dem

    Lichtpulse (12) in einen Überwachungsbereich (50) ausgesendet werden, mit einer Empfangseinheit (20) von einem Objekt (40) im Überwachungsbereich (50) zurückgestrahlte Lichtpulse (14) nachgewiesen werden und

    ein Abstand (d) zu dem Objekt (40) anhand einer Laufzeit (tc) der Lichtpulse (12) bestimmt wird, wobei eine Grundkorrektur eines Empfangszeitpunkts (t1, t2) des jeweiligen Lichtpulses (p1, p2) durchgeführt wird,
wobei eine Intensität von auf die Empfangseinheit (20) oder einen Fotodetektor in der Nachbarschaft von der Empfangseinheit (20) einkommendem Fremdlicht festgestellt wird und wobei in Abhängigkeit von der festgestellten Intensität des Fremdlichts eine Fremdlichtkorrektur der Empfangszeitpunkte der nachgewiesenen Lichtpulse (p1, p2) durchgeführt wird,
**dadurch gekennzeichnet,**
**dass** die Grundkorrektur eines Empfangszeitpunkts (t1, t2) eines nachgewiesenen Lichtpuls (p1, p2) in Abhängigkeit von einer für den nachgewiesenen Lichtpuls (p1, p2) jeweils festgestellten Pulsbreite (pw1, pw2) durchgeführt wird und
**dass** die Fremdlichtkorrektur des Empfangszeitpunkts eines nachgewiesenen Lichtpulses (p1, p2) durchgeführt wird in Abhängigkeit von der für den betreffenden Lichtpuls festgestellten Pulsbreite (pw1, pw2).

2. Verfahren nach Anspruch 1,
**dadurch gekennzeichnet,**
**dass** eine Pulsbreite (pw1, pw2) eines nachgewiesenen Lichtpulses (p1, p2) ermittelt wird durch Vergleich des, insbesondere digitalisierten, Empfangssignals mit einer Intensitätsschwelle (S).

3. Verfahren nach einem der Ansprüche 1 oder 2,
**dadurch gekennzeichnet,**
**dass** bei der Grundkorrektur des Empfangszeitpunkts eines nachgewiesenen Lichtpulses (p1, p2) ein von der für den betreffenden Lichtpuls (p1, p2) festgestellten Pulsbreite (pw1, pw2) abhängiger Korrekturwert von dem Empfangszeitpunkt (t1, t2) subtrahiert wird.

4. Verfahren nach einem der Ansprüche 1 bis 3,
**dadurch gekennzeichnet,**
**dass** bei der Fremdlichtkorrektur des Empfangszeitpunkts eines nachgewiesenen Lichtpulses (p1, p2) ein von der für den betreffenden Lichtpuls (p1, p2) festgestellten Pulsbreite (pw1, pw2) abhängiger Korrekturwert von dem Empfangszeitpunkt (t1, t2) subtrahiert wird.

5. Verfahren nach einem der Ansprüche 1 bis 4,
**dadurch gekennzeichnet,**
**dass** die Grundkorrektur und die Fremdlichtkorrektur sequenziell durchgeführt werden.

6. Verfahren nach einem der Ansprüche 1 bis 4,
**dadurch gekennzeichnet,**
**dass** die Grundkorrektur und die Fremdlichtkorrektur als eine einheitliche Korrektur des Empfangszeitpunkts durchgeführt werden.

7. Verfahren nach Anspruch 6,
**dadurch gekennzeichnet,**
**dass** bei der einheitlichen Pulsbreitenkorrektur des Empfangszeitpunkts eines nachgewiesenen Lichtpulses (p1, p2) ein von der für den betreffenden Lichtpuls (p1, p2) festgestellten Pulsbreite (pw1, pw2) abhängiger Korrekturwert von dem Empfangszeitpunkt (t1, t2) subtrahiert wird.

8. Verfahren nach einem der Ansprüche 1 bis 7,
**dadurch gekennzeichnet,**
**dass** eine Intensität des Fremdlichts festgestellt wird durch Messen eines Photostroms der Empfangseinheit (20).

9. Verfahren nach Anspruch 8,
**dadurch gekennzeichnet,**
**dass** der Photostrom gemessen wird durch Messung eines Spannungsabfalls (Vm) an einem Spannungsteiler (R3, R4).

10. Verfahren nach einem der Ansprüche 1 bis 9,
**dadurch gekennzeichnet,**
**dass** vor dem eigentlichen Meßbetrieb für eine Mehrzahl von, insbesondere gezielt eingestellten oder simulierten, Intensitäten des Fremdlichts und/oder für verschiedene Reflektivitäten und/oder Abstände eines Testobjekts Korrekturwerte für verschiedene Pulsbreiten (pw1, pw2) der nachgewiesenen Lichtpulse (p1, p2) bestimmt und abgespeichert werden.

11. Verfahren nach Anspruch 10
**dadurch gekennzeichnet,**
**dass** zur Simulation von unterschiedlichen Intensitäten des Fremdlichts ein Parameter der Empfangseinheit (20), insbesondere eine Vorspannung der Empfangseinheit (20), variiert wird.

12. Verfahren nach einem der Ansprüche 1 bis 11,
**dadurch gekennzeichnet,**
**dass** eine Ansteuerung der Empfangseinheit (20), insbesondere eine Ansteuerung eines Fotodetektors (22) in Abhängigkeit einer Intensität des Fremdlichts nicht geändert wird.

13. Optischer Sensor zum Messen eines Abstands eines Objekts nach dem Laufzeitprinzip, zur Durchführung des Verfahrens nach einem der Ansprüche 1 bis 12,

mit einer Sendeeinheit (10) zum Aussenden von Lichtpulsen (12) in einen Überwachungsbereich (50),
mit einer Empfangseinheit (20) zum Nachweisen von von einem Objekt (40) im Überwachungsbereich (50) zurückgestrahlten Lichtpulsen (14) und

mit einer Steuer- und Auswerteeinheit (80) zum Ansteuern der Sendeeinheit (10) und der Empfangseinheit (20) und zum Auswerten von von der Empfangseinheit (20) nachgewiesenen Lichtpulsen (p1, p2),

wobei die Steuer- und Auswerteeinheit (80) dazu eingerichtet ist, zur Bestimmung jeweils von effektiven Empfangszeitpunkten (te) der nachgewiesenen Lichtpulse (p1, p2) , in Abhängigkeit von einer für einen nachgewiesenen Lichtpuls (p1, p2) festgestellten Pulsbreite (pw1, pw2), eine Grundkorrektur eines Empfangszeitpunkts (t1, t2) dieses Lichtpulses (p1, p2) durchzuführen und

einen Abstand (d) zu dem Objekt (40) anhand der Laufzeit (tc) der Lichtpulse zu bestimmen, wobei die Steuer- und Auswerteeinheit (80) dazu eingerichtet ist,

eine Intensität von auf die Empfangseinheit (20) oder einen Fotodetektor in der Nachbarschaft der Empfangseinheit (20) einkommendem Fremdlicht auszuwerten und

in Abhängigkeit von der festgestellten Intensität des Fremdlichts eine Fremdlichtkorrektur der Empfangszeitpunkte der nachgewiesenen Lichtpulse (p1, p2) durchzuführen,

**dadurch gekennzeichnet,**

**dass** die Steuer- und Auswerteeinheit (80) weiterhin dazu eingerichtet ist, die Grundkorrektur eines Empfangszeitpunkts (t1, t2) eines nachgewiesenen Lichtpuls (p1, p2) in Abhängigkeit von einer für den nachgewiesenen Lichtpuls (p1, p2) jeweils festgestellten Pulsbreite (pw1, pw2) durchzuführen und

die Fremdlichtkorrektur des Empfangszeitpunkts eines nachgewiesenen Lichtpulses (p1, p2) in Abhängigkeit von der für den betreffenden Lichtpuls festgestellten Pulsbreite (pw1, pw2) durchzuführen.

**14.** Optischer Sensor nach Anspruch 13,
**dadurch gekennzeichnet,**
**dass** die Empfangseinheit (20) mindestens einen der folgenden Fotodetektoren aufweist: MMPC-Detektor, SPAD-Detektor, CMOS-Detektor, CCD-Detektor.

**15.** Optischer Sensor nach Anspruch 13 oder 14,
**dadurch gekennzeichnet,**
**dass** die Steuer- und Auswerteeinheit (80) eine Speichereinrichtung aufweist, in welcher in Abhängigkeit einer festgestellten Intensität des Fremdlichts Korrekturwerte für verschiedene Pulsbreiten (pw1, pw2) der nachgewiesenen Lichtpulse (p1, p2) gespeichert sind.

**16.** Optischer Sensor nach einem der Ansprüche 13 bis 15,

**dadurch gekennzeichnet,**
**dass** die Steuer- und Auswerteeinheit (80) dazu eingerichtet ist, das Verfahren nach einem der Ansprüche 1 bis 12 durchzuführen.

## Claims

**1.** Method for measuring a distance of an object according to the transit time principle, in which

light pulses (12) are emitted into a monitoring area (50),

light pulses (14) reflected back from an object (40) in the monitoring area (50) are detected by a receiving unit (20) and

a distance (d) to the object (40) is determined on the basis of a transit time (tc) of the light pulses (12),

wherein a basic correction of a reception time (t1, t2) of the respective light pulse (p1, p2) is carried out,

wherein an intensity of extraneous light arriving at the receiving unit (20) or at a photodetector in the vicinity of the receiving unit (20) is ascertained and

wherein an extraneous light correction of the reception times of the detected light pulses (p1, p2) is carried out as a function of the ascertained intensity of the extraneous light,

**characterized in that**

the basic correction of a reception time (t1, t2) of a detected light pulse (p1, p2) is carried out as a function of a pulse width (pw1, pw2) ascertained in each case for the detected light pulse (p1, p2) and

**in that** the extraneous light correction of the reception time of a detected light pulse (p1, p2) is carried out as a function of the pulse width (pw1, pw2) ascertained for the light pulse in question.

**2.** Method according to claim 1,
**characterized in that**
a pulse width (pw1, pw2) of a detected light pulse (p1, p2) is determined by comparing the, in particular digitized, received signal with an intensity threshold (S).

**3.** Method according to any one of claims 1 or 2,
**characterized in that**,
in the basic correction of the reception time of a detected light pulse (p1, p2), a correction value dependent on the pulse width (pw1, pw2) ascertained for the light pulse (p1, p2) in question is subtracted from the reception time (t1, t2).

**4.** Method according to any one of claims 1 to 3,

**characterized in that**,
in the extraneous light correction of the reception time of a detected light pulse (p1, p2), a correction value dependent on the pulse width (pw1, pw2) ascertained for the light pulse (p1, p2) in question is subtracted from the reception time (t1, t2).

5. Method according to any one of claims 1 to 4, **characterized in that**
the basic correction and the extraneous light correction are carried out sequentially.

6. Method according to any one of claims 1 to 4, **characterized in that**
the basic correction and the extraneous light correction are carried out as a unitary correction of the reception time.

7. Method according to claim 6, **characterized in that**,
in the unitary pulse width correction of the reception time of a detected light pulse (p1, p2), a correction value dependent on the pulse width (pw1, pw2) ascertained for the light pulse (p1, p2) in question is subtracted from the reception time (t1, t2).

8. Method according to any one of claims 1 to 7, **characterized in that**
an intensity of the extraneous light is ascertained by measuring a photocurrent of the receiving unit (20).

9. Method according to claim 8, **characterized in that**
the photocurrent is measured by measuring a voltage drop (Vm) across a voltage divider (R3, R4).

10. Method according to any one of claims 1 to 9, **characterized in that**,
prior to the actual measuring operation, correction values for different pulse widths (pw1, pw2) of the detected light pulses (p1, p2) are determined and stored for a plurality of, in particular specifically set or simulated, intensities of the extraneous light and/or for different reflectivities and/or distances of a test object.

11. Method according to claim 10, **characterized in that**,
in order to simulate different intensities of the extraneous light, a parameter of the receiving unit (20), in particular a bias of the receiving unit (20), is varied.

12. Method according to any one of claims 1 to 11, **characterized in that**
an actuation of the receiving unit (20), in particular an actuation of a photodetector (22), is not changed as a function of an intensity of the extraneous light.

13. Optical sensor for measuring a distance of an object according to the transit time principle, for carrying out the method according to any one of claims 1 to 12,

comprising a transmitting unit (10) for emitting light pulses (12) into a monitoring area (50),
comprising a receiving unit (20) for detecting light pulses (14) reflected back from an object (40) in the monitoring area (50) and
comprising a control and evaluation unit (80) for actuating the transmitting unit (10) and the receiving unit (20) and for evaluating light pulses (p1, p2) detected by the receiving unit (20),
wherein the control and evaluation unit (80) is designed
to carry out a basic correction of a reception time (t1, t2) of a light pulse (p1, p2) as a function of a pulse width (pw1, pw2) ascertained for the detected light pulse (p1, p2) in order to determine effective reception times (te) of the detected light pulses (p1, p2) and
to determine a distance (d) to the object (40) on the basis of the transit time (tc) of the light pulses,
wherein the control and evaluation unit (80) is designed
to evaluate an intensity of extraneous light arriving at the receiving unit (20) or at a photodetector in the vicinity of the receiving unit (20) and
to carry out an extraneous light correction of the reception times of the detected light pulses (p1, p2) as a function of the ascertained intensity of the extraneous light,
**characterized in that**
the control and evaluation unit (80) is further designed
to carry out the basic correction of a reception time (t1, t2) of a detected light pulse (p1, p2) as a function of a pulse width (pw1, pw2) ascertained in each case for the detected light pulse (p1, p2) and
to carry out the extraneous light correction of the reception time of a detected light pulse (p1, p2) as a function of the pulse width (pw1, pw2) ascertained for the light pulse in question.

14. Optical sensor according to claim 13, **characterized in that**
the receiving unit (20) comprises at least one of the following photodetectors: MMPC detector, SPAD detector, CMOS detector, CCD detector.

15. Optical sensor according to claim 13 or 14, **characterized in that**
the control and evaluation unit (80) comprises a memory device, in which correction values for different pulse widths (pw1, pw2) of the detected light pulses (p1, p2) are stored as a function of an ascertained intensity of the extraneous light.

16. Optical sensor according to any one of claims 13 to 15,
**characterized in that**
the control and evaluation unit (80) is designed to carry out the method according to any one of claims 1 to 12.

**Revendications**

1. Procédé pour mesurer une distance d'un objet selon le principe du temps de transit, selon lequel

des impulsions lumineuses (12) sont émises dans une zone de surveillance (50),
les impulsions lumineuses (14) renvoyées par un objet (40) dans la zone de surveillance (50) sont détectées avec une unité de réception (20) et
un distance (d) par rapport à l'objet (40) est déterminée sur la base d'un temps de transit (tc) des impulsions lumineuses (12),
dans lequel une correction de base d'un moment de réception (t1, t2) de l'impulsion lumineuse (p1, p2) respective est effectuée,
dans lequel une intensité de lumière parasite arrivant sur l'unité de réception (20) ou un photodétecteur au voisinage de l'unité de réception (20) est constatée et
dans lequel une correction de lumière parasite des moments de réception des impulsions lumineuses (p1, p2) détectées est effectuée en fonction de l'intensité constatée de la lumière parasite,
**caractérisé en ce**
**que** la correction de base d'un moment de réception (t1, t2) d'une impulsion lumineuse (p1, p2) détectée est effectuée en fonction d'une durée d'impulsion (pw1, pw2) respectivement constatée pour l'impulsion lumineuse (p1, p2) détectée et
**que** la correction de lumière parasite du moment de réception d'une impulsion lumineuse (p1, p2) détectée est effectuée en fonction de la durée d'impulsion (pw1, pw2) constatée pour l'impulsion lumineuse concernée.

2. Procédé selon la revendication 1,
**caractérisé en ce**
**qu'**une durée d'impulsion (pw1, pw2) d'une impulsion lumineuse (p1, p2) détectée est établie par comparaison du signal de réception, en particulier numérisé, avec un seuil d'intensité (S).

3. Procédé selon l'une quelconque des revendications 1 ou 2,
**caractérisé en ce**
**que** pour la correction de base du moment de réception d'une impulsion lumineuse (p1, p2) détectée une valeur de correction dépendante de la durée d'impulsion (pw1, pw2) constatée pour l'impulsion lumineuse (p1, p2) concernée est soustraite du moment de réception (t1, t2).

4. Procédé selon l'une quelconque des revendications 1 à 3,
**caractérisé en ce**
**que** pour la correction de lumière parasite du moment de réception d'une impulsion lumineuse (p1, p2) détectée une valeur de correction dépendante de la durée d'impulsion (pw1, pw2) constatée pour l'impulsion lumineuse (p1, p2) concernée est soustraite du moment de réception (t1, t2).

5. Procédé selon l'une quelconque des revendications 1 à 4,
**caractérisé en ce**
**que** la correction de base et la correction de lumière parasite sont effectuées de manière séquentielle.

6. Procédé selon l'une quelconque des revendications 1 à 4,
**caractérisé en ce**
**que** la correction de base et la correction de lumière parasite sont effectuées en tant que correction uniforme du moment de réception.

7. Procédé selon la revendication 6,
**caractérisé en ce**
**que** pour la correction de durée d'impulsion uniforme du moment de réception d'une impulsion lumineuse (p1, p2) détectée une valeur de correction dépendante de la durée d'impulsion (pw1, pw2) constatée pour l'impulsion lumineuse (p1, p2) concernée est soustraite du moment de réception (t1, t2).

8. Procédé selon l'une quelconque des revendications 1 à 7,
**caractérisé en ce**
**qu'**une intensité de la lumière parasite est constatée par mesure d'un courant photoélectrique de l'unité de réception (20).

9. Procédé selon la revendication 8,
**caractérisé en ce**
**que** le courant photoélectrique est mesuré par mesure d'une chute de tension (Vm) sur un diviseur de tension (R3, R4).

10. Procédé selon l'une quelconque des revendications 1 à 9,
**caractérisé en ce**
**qu'**avant l'activité de mesure proprement dite pour une pluralité d'intensités de la lumière parasite, en particulier réglées ou simulées de manière ciblée, et/ou pour différentes réflectivités et/ou distances d'un objet de test des valeurs de correction pour différentes durées d'impulsion (pw1, pw2) des impulsions lumineuses (p1, p2) détectées sont déterminées et mises en mémoire.

11. Procédé selon la revendication 10
**caractérisé en ce**
**que** pour la simulation de différentes intensités de la lumière parasite un paramètre de l'unité de réception (20), en particulier une précontrainte de l'unité de réception (20), est modifié.

12. Procédé selon l'une quelconque des revendications 1 à 11,
**caractérisé en ce**
**qu'**une commande de l'unité de réception (20), en particulier une commande d'un photodétecteur (22) n'est pas changée en fonction d'une intensité de la lumière parasite.

13. Capteur optique pour mesurer une distance d'un objet selon le principe du temps de transit, pour la mise en œuvre du procédé selon l'une quelconque des revendications 1 à 12,

avec une unité d'émission (10) pour envoyer des impulsions lumineuses (12) dans une zone de surveillance (50),
avec une unité de réception (20) pour détecter des impulsions lumineuses (14) renvoyées par un objet (40) dans la zone de surveillance (50) et avec une unité de commande et d'évaluation (80) pour commander l'unité d'émission (10) et l'unité de réception (20) et pour évaluer des impulsions lumineuses (p1, p2) détectées par l'unité de réception (20),
dans lequel l'unité de commande et d'évaluation (80) est conçue,
pour la détermination respectivement de moments de réception effectifs (te) des impulsions lumineuses (p1, p2) détectées, en fonction d'une durée d'impulsion (pw1, pw2) constatée pour une impulsion lumineuse (p1, p2) détectée, pour effectuer une correction de base d'un moment de réception (t1, t2) de cette impulsion lumineuse (p1, p2) et
pour déterminer une distance (d) par rapport à l'objet (40) sur la base du temps de transit (tc) des impulsions lumineuses,
dans lequel l'unité de commande et d'évaluation (80) est conçue
pour évaluer une intensité de la lumière parasite arrivant sur l'unité de réception (20) ou un photodétecteur au voisinage de l'unité de réception (20) et
en fonction de l'intensité constatée de la lumière parasite pour effectuer une correction de lumière parasite des moments de réception des impulsions lumineuses (p1, p2) détectées,
**caractérisé en ce**
**que** l'unité de commande et d'évaluation (80) est conçue en outre
pour effectuer la correction de base d'un moment de réception (t1, t2) d'une impulsion lumineuse (p1, p2) détectée en fonction d'une durée d'impulsion (pw1, pw2) respectivement constatée pour l'impulsion lumineuse (p1, p2) détectée et
pour effectuer la correction de lumière parasite du moment de réception d'une impulsion lumineuse (p1, p2) détectée en fonction de la durée d'impulsion (pw1, pw2) constatée pour l'impulsion lumineuse concernée.

14. Capteur optique selon la revendication 13,
**caractérisé en ce**
**que** l'unité de réception (20) présente au moins un des photodétecteurs suivants : détecteur MMPC, détecteur SPAD, détecteur CMOS, détecteur CCD.

15. Capteur optique selon la revendication 13 ou 14,
**caractérisé en ce**
**que** l'unité de commande et d'évaluation (80) présente un dispositif de mémoire dans lequel en fonction d'une intensité constatée de la lumière parasite des valeurs de correction pour différentes durées d'impulsion (pw1, pw2) des impulsions lumineuses (p1, p2) détectées sont mises en mémoire.

16. Capteur optique selon l'une quelconque des revendications 13 à 15,
**caractérisé en ce**
**que** l'unité de commande et d'évaluation (80) est conçue pour mettre en œuvre le procédé selon l'une quelconque des revendications 1 à 12.

**Fig. 1**

**Fig. 2**

Δd [cm]

Pulsbreite [m]

**Fig. 3**

**Fig. 4**

ΔU [V]

Fremdlicht [kLux]

## Fig. 5

PW [m]

Fremdlicht [kLux]

## Fig. 6

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10356797 A1
- JP 2021076589 A

- US 2019250257 A1